# EUROPEAN PATENT SPECIFICATION

(11) **EP 2 601 324 B1**
(45) Date of publication and mention of the grant of the patent: **25.03.2020**
(21) Application number: 11741556.2
(22) Date of filing: 28.07.2011
(51) Int. Cl.: C22B 7/00, C22B 21/00

(54) **PROCESS FOR MELTING SCRAP METAL**
VERFAHREN ZUM SCHMELZEN VON ALTMETALL
PROCÉDÉ DE FUSION DE DÉCHETS MÉTALLIQUES

(30) Priority: 04.08.2010 EP 10305860
(43) Date of publication of application: 12.06.2013
(73) Proprietor: L'Air Liquide Société Anonyme pour l'Etude et l'Exploitation des Procédés Georges Claude, 75007 Paris (FR)
(72) Inventor: JARRY, Luc, F-92190 Meudon (FR); TSIAVA, Rémi, F-91250 Saint Germain Les Corbeil (FR)
(74) Representative: De Vleeschauwer, Natalie Y.L.D.
(86) International application number: PCT/EP2011/063054
(87) International publication number: WO 2012/016913

(56) References cited:
- EP-A2- 1 850 067
- WO-A2-2009/047338
- US-A- 5 683 238
- US-A1- 2007 006 681
- US-A1- 2010 183 990
- M. POTESSER, B.HOLLEIS, D.SPOLJARIC: "Burner Developements of the Messer Group for the Nonferrous Metallurgical Industry", BHM, vol. 153, no. 3, 2008, pages 121-125, XP002615908, DOI: DOI: 10.1007/s00501-008-0362-9 cited in the application
- Tommi Niemi: "Increased efficiency in Heating: State-of-the-Art Oxyfueld Combustions", Finnish-Swedish Flame Days 2009 , 28 January 2009 (2009-01-28), pages 1-12, XP002615909, Retrieved from the Internet: URL:http://www.tut.fi/units/me/ener/IFRF/F inSweFlameDays09/NiemiPaper.pdf [retrieved on 2010-10-13]

## Description

The present invention relates to the recycling of metal through scrap metal melting.

Scrap metal melting is a major aspect of the metallurgical industry.

Indeed, scrap metal is used as raw material for metal melting in the ferrous and in the non-ferrous metallurgical industry for economical, technical and environmental reasons.

The development of the metal recycling industry depends largely on the availability of the scrap metal.

A typical example in the field of non-ferrous metallurgy is the recycling of aluminium.

Aluminium is currently the most commonly recycled post-consumer metal in the world.

In Europe, for example, aluminium enjoys high recycling rates, ranging from 41 % for beverage cans to 85 % in the building and construction sector and up to 95 % in the automotive sector. The industry is furthermore constantly investing and researching improvements in collection and sorting so as to achieve the best possible levels of recycling.

Aluminium recyclers melt a wide range of aluminium scraps acquired both on the local market and from import.

As scrap is usually made of contaminated material of variable composition, the secondary melting industry, such as the scrap aluminium industry, needs production tools, and in particular melting furnaces, which are both powerful and flexible.

A key issue for commercial scrap metal melters is process efficiency.

Process efficiency covers in particular the following factors:
- time efficiency: i.e. the rate at which a given amount of scrap metal is melted,
- energy efficiency: i.e. the energy required for melting a given amount of scrap metal, and
- metal recovery efficiency: i.e. the tapped molten metal to scrap metal ratio.

It is known in the art to melt scrap metal in a furnace by means of heat generated by air-combustion, i.e. by combusting a fuel with air as the oxidant. Such melting processes generally present low time and energy efficiency, but relatively high metal recovery efficiency.

It is also known in the art to melt scrap metal in a furnace by means of heat generated by oxy-combustion, i.e. by combusting a fuel with oxygen or with oxygen-enriched air as the oxidant so as to increase the time and energy efficiency of the process. It is, however, a problem with existing oxy-combustion processes that, as will be explained below, metal recovery efficiency is thereby reduced, in particular due to increased oxidation of the metal during the melting process.

In the article "Burner Developments of the Messer Group for the Nonferrous Metallurgical Industry" by M. Potesser et al (BMH, 153, Jg.(2008), Heft 3, pp 121-125), it is proposed to use diluted combustion or partial diluted combustion in hearth-type furnaces for scrap metal for a constant temperature on the far side of the furnaces and to reach admissible low pollutant emission level.

It has further been proposed to regulate burner power during the melting process in order to keep metal oxidation under control as far as possible in the case of oxy-combustion, for example as a function of the temperature in the furnace or of the refractory material surrounding the combustion chamber.

It is an aim of the present invention to provide a scrap metal melting process with improved overall process efficiency.

The process for melting scrap metal in a furnace according to the invention comprises the steps of:
- feeding a charge of solid scrap metal to the furnace,
- supplying fuel and an oxidant to the furnace,
- combusting the fuel with the oxidant to generate heat inside the furnace,
- melting the charge of solid scrap metal in the furnace by means of the heat generated by said combustion , thereby obtaining molten metal, and
- withdrawing the molten metal obtained by melting the charge of solid scrap metal from the furnace.

Following the step of feeding the charge of solid scrap metal to the furnace, the fuel is combusted with the oxidant in a first combustion mode so as to generate one or more visible flames in the furnace above the charge.

However, before the step of withdrawing the molten metal from the furnace, the fuel is combusted with the oxidant in a second combustion mode so as to generate flameless combustion in the furnace above the molten metal.

In accordance with the present invention, the oxidant has an oxygen content of at least 60% by volume.

Flameless combustion is a mode of combustion whereby, with a burner and a furnace combustion chamber of suitable geometry, the feeding of oxidant and fuel is performed separately (to provide highly staged combustion) and with high injection speeds of at least one reactant, typically the oxidant, so as to create within the combustion chamber substantial internal recirculation of combustion products to the burner at a temperature at or above the auto-ignition temperature of the fuel. The flame can then no longer be seen with the naked eye and combustion is distributed throughout a large volume or even the entire volume of the atmosphere of the combustion chamber.

Burners suitable for generating flameless combustion are now commercially available. Preferred burners for suitable for flameless combustion are described in copending U.S. provisional patent application number 61/363,627 filed on July 12, 2010, copending U.S. non-provisional patent application number 12/848,131 filed on July 31, 2010, and copending U.S. non-provisional patent application number 12/848,132 filed on July 31, 2010.

In the present context, the term "burner" is used to describe, generally speaking, a device or equipment for combining at least one fuel with at least one oxidant for combustion of said at least one fuel with the at least one oxidant.

The process according to the invention can be a batch process, whereby all the solid scrap metal is fed to the furnace in one go.

The process according to the invention can also be a semi-batch process, whereby the solid scrap metal to be melted is fed to the furnace in several steps, each step of feeding a charge of solid scrap metal to the furnace being followed by combustion of the fuel with the oxidant in the first combustion mode so as to generate one or more visible flames in the furnace above the charge.

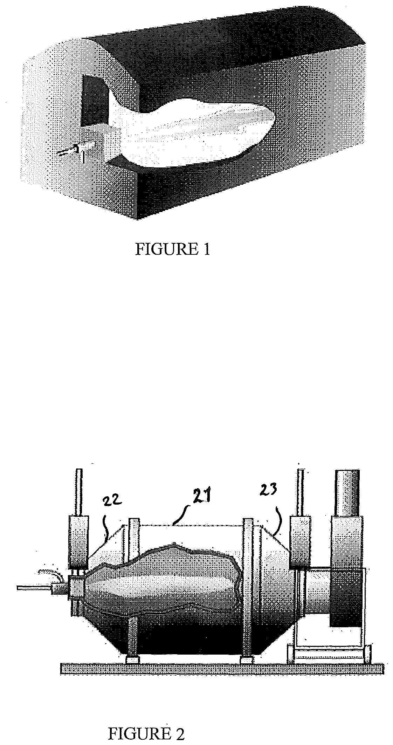

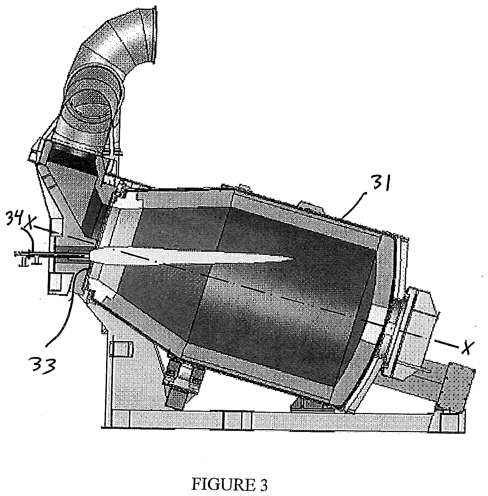

Figures 1 to 3 are schematic illustrations of three known types furnaces used for melting scrap metal, whereby figure 1 represents a fixed melting furnace, figure 2 represents a revolving drum melting furnace and figure 3 represents a tilting furnace.

The furnace can for example be a fixed melting furnace.

According to a specific embodiment of the invention, the furnace is a revolving drum rotary furnace having a substantially cylindrical refractory wall 21, a first end wall 22 at one end of the cylindrical refractory wall 21 and a second end wall 23 at the opposite end of the cylindrical refractory wall 21.

According to a further embodiment, the furnace can be a tilting furnace, sometimes also referred to as a tilting rotary furnace. This is a type of furnace than can be tilted about its major axis X-X to facilitate the pouring of the molten charge. Such furnaces often have a larger capacity than fixed furnaces, some of the former being designed to take up to 300 tons. Tilting furnaces typically comprise a tilting pocket 31, the burner 34, burners or lances being mounted in the pouring and charging opening 33 of said pocket.

For ease of operation, the number of visible flames generated in the first combustion mode will typically be selected to be as small as possible while ensuring adequate flame coverage of the charge. For example, in revolving drum rotary furnaces a single visible flame will typically be generated in the first combustion mode by means of a burner mounted in the first or in the second end wall of the rotary furnace and in tilting furnaces, a single visible flame will typically be generated in the first combustion mode by means of a burner mounted in the opening of the tilting pocket.

In the first combustion mode, the one or more visible flames may have a fixed orientation. Alternatively, the orientation of at least one visible flame may be varied in the first combustion mode. Such variation of the orientation of a visible flame can be made stepwise, gradually or a combination of both. By varying the orientation of a visible flame it is possible to increase the coverage of the charge by said flame while preventing local overheating of said charge. Preferred methods and devices for modifying the orientation of a visible flame are described in the applicant's earlier patent applications WO-A-2008/003908, WO-A-2009092949 and WO-A- 2009087227.

In the first combustion mode, at least one visible flame is advantageously directed towards the charge. When more than one visible flame is generated in the first combustion mode, preferably each of the one or more visible flames are directed towards the charge. By bringing the visible flame or flames closer to the charge, heat transfer from the flame to the charge of solid scrap metal is improved. In some cases, a visible flame directed towards the charge may also impact the charge. In other cases, however, it will be preferable that a visible flame directed towards the charge does not impact the charge, in particular in order to prevent detrimental phenomena such as solid particles of the charge being propelled against the furnace walls or local oxidation of the metal.

When the furnace is a revolving drum rotary furnace, not only can heat transfer from the flame to the charge be improved by directing at least one flame towards the charge as described above. Heat transfer from a flame to the charge can also be improved indirectly by directing the flame towards the revolving cylindrical wall 21 so as to increase the temperature of said cylindrical wall before it slips under the charge. Therefore, when the furnace is a revolving drum rotary furnace, at least one visible flame is preferably directed towards the charge and/or towards the cylindrical refractory wall in the first combustion mode.

Different burners may be used to generate the at least one visible flame in the first combustion mode and the flameless combustion in the second combustion mode.

Preferably, however, a same burner is used to generate a visible flame in the first combustion mode and flameless combustion in the second combustion phase. Burners capable of generating both a visible flame and flameless combustion are described in copending U.S. provisional patent application number 61/363,627 filed on July 12, 2010, copending U.S. non-provisional patent application number 12/848,131 filed on July 31, 2010, and copending U.S. non-provisional patent application number 12/848,132 filed on July 31, 2010.

According to one embodiment of the invention, combustion in the second combustion mode before the step of withdrawing molten metal directly succeeds combustion in the first combustion mode following the step of feeding a charge of solid scrap metal.

According to a different embodiment of the invention, the process comprises a transitional combustion mode between the first and the second combustion mode, whereby during the transitional combustion mode the fuel is combusted with the oxidant so as to generate at least one visible flame and increase the temperature of at least the area of the furnace atmosphere where flameless combustion is to take place in the subsequent second combustion mode to a temperature at least equal to or above the auto-ignition temperature of the fuel.

The process of the present invention is particularly useful for melting non-ferrous scrap metal. The process is, however, also useful for melting ferrous scrap metals/alloys, in particular in those melting processes where oxidation of the scrap metal is to be substantially avoided.

When the process is used for melting non-ferrous metals, the scrap metal is advantageously selected from the group consisting of aluminium, copper, zinc, lead, nickel, cobalt, titanium, chromium, and precious metals and alloys of these metals, and more advantageously selected from aluminium, copper, zinc, lead, cobalt, titanium, chromium, and precious metals and alloys of these metals. The process is of particular interest for melting scrap aluminium and scrap aluminium alloys.

The fuel may be a liquid fuel such as fuel oil or light fuel oil.

The fuel is preferably a gaseous fuel. Preferred gaseous fuels are selected from the group consisting of natural gas, propane and butane and mixtures thereof.

As mentioned above, the oxidant contains at least 60% by volume of oxygen. Preferably the oxidant has an oxygen content of at least 65% by volume, preferably of at least 80% by volume and more preferably of at least 90% by volume.

The point at which, during the melting process, combustion of the fuel in the first combustion mode following the step of feeding the charge of solid scrap metal is terminated and combustion of the fuel in the second combustion mode or in the transitional combustion mode, as the case may be, is commenced, can be determined in several ways so as to optimise the process efficiency through obtaining an optimized combination of time efficiency, energy efficiency and metal recovery efficiency.

For example, as indicated above, it is known in the art to operate a scrap melting process in a furnace as a semi-batch process whereby the solid scrap metal to be melted is fed to the furnace is several steps, each step of feeding a charge of solid scrap metal to the furnace being followed by combustion of the fuel with the oxidant in the first combustion mode so as to generate one or more visible flames in the furnace above the charge. The lapse of time between the final step of feeding solid scrap metal to the furnace and the switch from fuel combustion in the first combustion mode to fuel combustion in the transitional or in the second combustion mode may correspond to lapse of time between two successive steps of feeding solid scrap metal to the furnace and may be based on the same criteria, such as temperature, flue gas properties or optical detection, typically reflecting a degree of completion of the melting of said scrap.

In general, the switch from fuel combustion in the first combustion mode to fuel combustion in the transitional or in the second combustion mode can be determined as a function of the temperature of the refractory material in the area of the furnace where the combustion takes place. In particular, fuel combustion may switch from the first combustion mode to the transitional or to the second combustion mode when the temperature of the refractory material exceeds a predetermined limit.

It is also possible to switch fuel combustion from the first combustion mode to the transitional or to the second combustion mode as a function of the temperature inside the furnace, as a function of the temperature of the molten metal in the furnace or as a function of the temperature of the flue gas leaving the furnace.

It is also possible to measure the concentration of certain components, such as oxygen, in the furnace atmosphere and to regulate the switch from fuel combustion in the first combustion mode to fuel combustion in the transitional or in the second combustion mode as a function of same.

Likewise, said switch may be regulated as a function of different measured properties of the flue gas as it leaves the furnace, such as temperature, oxygen concentration, hydrocarbon concentration, CO concentration, etc. A suitable method for detecting different properties of the flue gas leaving an aluminium melting furnace is for example described in WO-A-03056044 in the name of the applicant.

A further possibility is to determine the degree to which the charge of solid scrap metal in the furnace is melted by optical means such as infra-red or optical video surveillance.

Naturally, when the properties of the furnace and of the scrap metal are well known, typically as a result of numerous observations, the furnace operator may know the approximate optimum duration of fuel combustion in the first combustion mode or the approximate optimum amount of energy (for example measured in terms of fuel or oxygen consumed) to be provided during said combustion in the first combustion mode for a given charge of scrap metal. In that case, the operator may automatically switch from combustion in the first combustion mode to combustion in the transitional mode or in the second combustion mode after expiry of said optimum duration or once said optimum amount of energy has been supplied.

A further interesting possibility exists in the case of revolving drum rotary furnaces. Indeed, the viscosity of a molten metal varies in function of its temperature. The drive torque required for rotating the revolving drum is therefore an indirect indication for the temperature of the molten metal, taking into account the amount of molten metal and the nature (composition) of the metal or alloy present in the furnace. It is therefore possible to switch from combustion in the first combustion mode to combustion in the transitional combustion mode or in the second combustion mode when the drive torque required for rotating the revolving drum reaches or descends below a predetermined lower limit selected in function of the nature and the amount of molten metal present.

For improved reliability of said regulation, several of the above criteria may be combined.

According to one embodiment of the process, the switch from fuel combustion in the first combustion mode to fuel combustion in the transitional combustion mode or in the second combustion mode, as the case may be, takes place when substantially all solid scrap metal is melted.

Alternatively, in order to increase metal recovery efficiency, the switch may be made somewhat before said stage is reached, i.e. at a stage in the process at which a major part of the solid scrap metal is melted, but at which there is still a non-negligible amount of solid scrap metal present in the furnace.

The present invention thus provides a scrap metal melting process with improved process efficiency.

Energy efficiency is first of all improved by the use of an oxidant having a higher oxygen content than air. In this manner, the concentration of inert gas or ballast gas in the oxidant is reduced, which in turn leads to increased energy efficiency of the combustion process.

Following the step of feeding the charge of solid scrap metal, the process benefits from the energy and time efficiency achievable through heating and melting solid scrap metal with one or more visible flames, visible flames being typically high-temperature flames.

However, when melting solid scrap metal at high energy and time efficiency with one or more visible flames, in particular when said visible flames are generated by combusting a fuel with an oxygen-rich oxidant, metal loss and therefore reduced metal recovery efficiency appeared thus far to be an unavoidable consequence.

In the case of melting scrap aluminium, for example, losses during melting and casting result primarily from the formation of dross, a mixture of oxide and melt. Even if part of the oxide of aluminium can be recovered and used in secondary steelmaking for slag deoxidation, today the cost of metal lost to dross has become unacceptably high as has the corresponding environmental burden.

Furthermore, oxide of aluminium forms rapidly on the surface of melts of aluminium when the temperature of said melt approaches 750°C. This layer of oxide of aluminium constitutes a highly effective heat barrier confining the molten aluminium, so that the formation of dross not only reduces the metal recovery efficiency, but also the energy efficiency and therefore the time efficiency of the melting process.

It has been observed that the problem of dross formation is more significant in a melting process using oxy-combustion than in a melting process using air-combustion
In the case of revolving drum rotary melting furnaces, a further aspect of this problem is the formation of a layer of dross on the refractory cylindrical wall of the furnace. This layer of dross again constitutes a thermal barrier between the heat generated by the combustion of the fuel and the refractory walls and prevent said cylindrical wall from reaching a sufficiently high temperature, which again affects the energy and time efficiency of the melting process. It has furthermore been observed that this problem is significantly heightened in the case of an oxygen-rich oxidant, thereby at least partially offsetting the advantages of melting by means of oxy-combustion of the fuel.

It is known in the art to limit metal loss due to oxidation by adding salts to the charge or to the molten metal. However, the use of such salts itself entails significant costs to the scrap metal melter, which partially or even totally offset the gain in metal recovery efficiency. Furthermore, the use of such salts may itself present additional environmental issues.

It has surprisingly been found that, in accordance with the present invention, oxidation of the metal can be limited at high time efficiency and high energy efficiency through a combination of (a) rapid melting with combustion in the first combustion mode with a radiative and convective oxy-flame directed towards the charge, and, (b) when the charge has become partially or totally molten, flameless combustion in accordance with the second combustion mode.

In theory, metal recovery efficiency would be optimized, when operating in the second combustion mode to keep the furnace temperature only slightly above the solidification point of the metal and/or to control the supply of oxygen to the furnace so as to avoid a substantially oxidizing atmosphere above in contact with the molten metal. In practice however, in order to ensure that the metal is entirely in the molten state and sufficiently homogeneous and in order to compensate for heat loss during transport of the molten metal from the furnace to the forming machine or the holding furnace, when operating in the second combustion mode, the temperature of the furnace is kept at a somewhat higher level.

The temperature of the furnace or of the molten metal in the furnace regulating the switch from combustion in the first combustion mode to combustion in the transitional or in the second combustion mode can be measured with thermocouples located in several points such as: in the furnace door through which the solid scrap metal is fed to the furnace, in the path of the flue gas leaving the furnace and/or in the refractory lining of the furnace. Measurements from these locations provide reliable information on the condition of the charge in the furnace. Other indicators such as drive torque, in case of a rotary furnace, and hot face refractory temperature measurement inside the furnace by means of an optical "laser guided" infrared pyrometer allowing to establish the metal temperature, are possible.

Melting of the metal from solid scrap metal to molten metal is mainly achieved by combustion of the fuel in the first combustion mode, until the molten metal reaches a predetermined maximum temperature depending of the type of metal or alloy to be melted.

When the charge is mainly or totally in the form of molten metal, the charge is heated by combustion of the fuel in the second combustion mode to ensure that melting is fully completed and to attain and maintain a sufficient level of homogeneity of the molten metal until the molten metal is withdrawn from the furnace. During this period, the charge is held in the liquid phase at a temperature which likewise depends on the type of metal or alloy.

Said temperature can furthermore be selected so as to compensate for metal heat losses during the transport of the molten metal from the furnace to the forming machine or to the holding furnace.

The advantages of the present invention are furthermore made apparent in the following example.

Solid scrap aluminium in the form of recycled drink cans are fed to a revolving drum rotating furnace in three successive feed steps.

Following each step of feeding a load of solid scrap aluminium to the furnace, the fuel is combusted with the oxidant by means of the burner located in an end wall of the furnace so as to generate a single long oxy-natural gas flame in the furnace above the charge, the direction of said flame being varied as described in WO-A-2009087227.

When the temperature of the molten metal reaches about 620°C, as determined by the drive torque required for rotating the furnace, a new load of solid scrap aluminium is fed to the furnace, thereby lowering the temperature inside the furnace and of the molten metal, whereafter the fuel is again combusted with the oxidant by means of the burner located in an end wall of the furnace so as to generate a single long oxy-natural gas flame of varying direction in the furnace above the charge.

When, following the feeding of the third load of solid scrap aluminium, the temperature of the melt has again reached about 620°C, the combustion of the fuel is switched to the transitional mode, the single visible flame being now directed substantially along the axes of the revolving drum, until the temperature of the furnace atmosphere exceeds the auto-ignition temperature of natural gas.

Thereafter, the combustion of the fuel is switched from the transitional mode to the second combustion mode so as to generate flameless combustion above the molten aluminium in a furnace atmosphere without substantial excess of oxygen. In this manner the molten aluminium is heated to and subsequently maintained at a temperature of about 720°C until it is withdrawn from the furnace for casting.

No salt was added to reduce dross formation.

The energy and time efficiency of the process executed according to the present invention was found to be sometimes better or at least equivalent to the energy and time efficiency of corresponding known oxy-fuel combustion processes. At the same time, the metal recovery efficiency was found to be equivalent and sometimes better to that obtained with corresponding salt-free air-combustion melting processes.

The present invention therefore presents the major advantage of enabling the overall process efficiency to be increased with respect both to known air-fuel combustion processes and known oxy-fuel combustion processes.

## Claims

1. Process for melting scrap metal in a furnace, said process comprising the steps of:
- feeding a charge of solid scrap metal to the furnace,
- supplying fuel and an oxidant having an oxygen content of at least 60%vol to the furnace and combusting the fuel with the oxidant to generate heat inside the furnace,
- melting the charge of solid scrap metal in the furnace by means of the heat so generated, thereby obtaining molten metal,
- withdrawing the molten metal from the furnace,
whereby, following the step of feeding the charge of solid scrap metal to the furnace, the fuel is combusted with the oxidant in a first combustion mode so as to generate one or more visible flames in the furnace above the charge,
the process being **characterized in that**: before the step of withdrawing the molten metal from the furnace, the fuel is combusted with the oxidant in a second combustion mode so as to generate flameless combustion in the furnace above the molten metal.

2. Process according to claim 1, whereby the one or more visible flames have a fixed orientation in the first combustion mode.

3. Process according to claim 1, whereby the orientation of at least one visible flame is varied in the first combustion mode.

4. Process according to any one of the preceding claims, whereby, in the first combustion mode, at least one visible flame is directed towards the charge.

5. Process according to any one of claims 1 to 4, whereby the furnace is a rotary furnace, having a substantially cylindrical refractory wall (21), a first end wall (22) at one end of the cylindrical refractory wall (21) and a second end wall (23) at the opposite end of the cylindrical refractory wall.

6. Process according to claim 5, whereby, during the first combustion mode, at least one visible flame is directed towards the charge and/or towards the cylindrical refractory wall (21).

7. Process according to any one of claims 1 to 4, whereby the furnace is a tilting furnace having a tilting pocket (31) with a pouring and charging opening (33) and a burner (34) mounted in the pouring and charging opening (33).

8. Process according to any one of the preceding claims, whereby a same burner generates a visible flame during the first combustion mode and flameless combustion during the second combustion mode.

9. Process according to any one of the preceding claims, comprising a transitional combustion mode between the first combustion mode and the second combustion mode, whereby in the transitional combustion mode the fuel is combusted with the oxidant so as generate at least one visible flame and increase the temperature of the furnace atmosphere at least in the area of the furnace atmosphere where flameless combustion is to take place in the subsequent second combustion mode to a temperature above the lower flammable limit of the fuel.

10. Process according to any one of the preceding claims, whereby the scrap metal is selected from the group comprising aluminium, copper, zinc, lead, cobalt, titanium, chromium, and precious metals and alloys of these metals.

11. Process according to claim 10, whereby the scrap metal is aluminium or an aluminium alloy.

12. Process according to any one of the preceding claims, whereby the fuel is a gaseous fuel.

13. Process according to claim 12, whereby the fuel is selected from the group comprising natural gas, butane and propane and mixtures thereof.

14. Process according to any one of the preceding claims, whereby the oxidant has an oxygen content of at least 65%vol, preferably of at least 80%vol and more preferably of at least 90%vol.

15. Process according to any one of the preceding claims, whereby the first combustion phase is terminated when substantially all solid scrap metal is melted.

## Patentansprüche

1. Verfahren zum Schmelzen von Altmetall in einem Ofen, wobei das Verfahren folgende Schritte umfasst:
- Beschicken des Ofens mit einer Ladung von festem Altmetall,
- Zuführen von Brennstoff und eines Oxidationsmittels, das einen Sauerstoffgehalt von mindestens 60 Vol.-% aufweist, in den Ofen und Verbrennen des Brennstoffs mit dem Oxidationsmittel, um im Innern des Ofens Wärme zu erzeugen,
- Schmelzen der Ladung von festem Altmetall in dem Ofen mittels der somit erzeugten Wärme, wodurch eine Metallschmelze erzielt wird,
- Entnehmen der Metallschmelze aus dem Ofen,
wobei nach dem Schritt des Beschickens des Ofens mit der Ladung von festem Altmetall der Brennstoff mit dem Oxidationsmittel in einem ersten Verbrennungsmodus verbrannt wird, um eine oder mehrere sichtbare Flammen in dem Ofen über der Ladung zu erzeugen;
wobei das Verfahren **dadurch gekennzeichnet ist, dass**: vor dem Schritt des Entnehmens der Metallschmelze aus dem Ofen der Brennstoff mit dem Oxidationsmittel in einem zweiten Verbrennungsmodus verbrannt wird, um eine flammenlose Verbrennung in dem Ofen über der Metallschmelze zu erzeugen.

2. Verfahren nach Anspruch 1, wobei die eine oder die mehreren sichtbaren Flammen eine feste Orientierung in dem ersten Verbrennungsmodus aufweisen.

3. Verfahren nach Anspruch 1, wobei die Orientierung mindestens einer sichtbaren Flamme in dem ersten Verbrennungsmodus variiert wird.

4. Verfahren nach einem der vorhergehenden Ansprüche, wobei in dem ersten Verbrennungsmodus mindestens eine sichtbare Flamme in Richtung auf die Ladung gerichtet ist.

5. Verfahren nach einem der Ansprüche 1 bis 4, wobei der Ofen ein Drehofen ist, der eine im Wesentlichen zylindrische feuerfeste Wand (21), eine erste Endwand (22) an einem Ende der zylindrischen feuerfesten Wand (21) und eine zweite Endwand (23) an dem gegenüberliegenden Ende der zylindrischen feuerfesten Wand aufweist.

6. Verfahren nach Anspruch 5, wobei während des ersten Verbrennungsmodus mindestens eine sichtbare Flamme in Richtung auf die Ladung und/oder in Richtung auf die zylindrische feuerfeste Wand (21) gerichtet ist.

7. Verfahren nach einem der Ansprüche 1 bis 4, wobei der Ofen ein Kippofen ist, der ein Kippfach (31) mit einer Schütt- und Ladeöffnung (33) und einen Brenner (34), der in der Schütt- und Ladeöffnung (33) montiert ist, aufweist.

8. Verfahren nach einem der vorhergehenden Ansprüche, wobei derselbe Brenner eine sichtbare Flamme während des ersten Verbrennungsmodus und eine flammenlose Verbrennung während des zweiten Verbrennungsmodus erzeugt.

9. Verfahren nach einem der vorhergehenden Ansprüche, umfassend einen Übergangsverbrennungsmodus zwischen dem ersten Verbrennungsmodus und dem zweiten Verbrennungsmodus, wobei in dem Übergangsverbrennungsmodus der Brennstoff mit dem Oxidationsmittel derart verbrannt wird, dass er mindestens eine sichtbare Flamme erzeugt und die Temperatur der Ofenatmosphäre mindestens in dem Bereich der Ofenatmosphäre, in dem eine flammenlose Verbrennung in dem darauffolgenden zweiten Verbrennungsmodus stattfinden soll, auf eine Temperatur über der unteren Zündgrenze des Brennstoffs erhöht.

10. Verfahren nach einem der vorhergehenden Ansprüche, wobei das Altmetall aus der Gruppe ausgewählt wird, die Aluminium, Kupfer, Zink, Blei, Kobalt, Titan, Chrom und Edelmetalle und Legierungen dieser Metalle umfasst.

11. Verfahren nach Anspruch 10, wobei das Altmetall Aluminium oder eine Aluminiumlegierung ist.

12. Verfahren nach einem der vorhergehenden Ansprüche, wobei der Brennstoff ein gasförmiger Brennstoff ist.

13. Verfahren nach Anspruch 12, wobei der Brennstoff aus der Gruppe ausgewählt wird, die Erdgas, Butan und Propan und Mischungen davon umfasst.

14. Verfahren nach einem der vorhergehenden Ansprüche, wobei das Oxidationsmittel einen Sauerstoffgehalt von mindestens 65 Vol.-%, bevorzugt von mindestens 80 Vol.-% und bevorzugter von mindestens 90 Vol.-% aufweist.

15. Verfahren nach einem der vorhergehenden Ansprüche, wobei die erste Verbrennungsphase beendet ist, wenn im Wesentlichen das gesamte feste Altmetall geschmolzen ist.

## Revendications

1. Processus pour faire fondre un déchet métallique dans un four, ledit processus comprenant les étapes consistant à :
- fournir une charge de déchet métallique solide au four,
- apporter du combustible et un oxydant ayant une teneur en oxygène d'au moins 60 % en volume au four et brûler le combustible avec l'oxydant pour générer de la chaleur à l'intérieur du four,
- faire fondre la charge de déchet métallique solide dans le four au moyen de la chaleur ainsi générée, et ainsi obtenir un métal fondu,
- retirer le métal fondu du four,
selon lequel, après l'étape de fourniture de la charge de déchet métallique solide au four, le combustible est brûlé avec l'oxydant dans un premier mode de combustion de façon à générer une ou plusieurs flammes visibles dans le four au-dessus de la charge,
le processus étant **caractérisé en ce que** : avant l'étape de retrait du métal fondu du four, le combustible est brûlé avec l'oxydant dans un second mode de combustion de façon à générer une combustion sans flamme dans le four au-dessus du métal fondu.

2. Processus selon la revendication 1, selon lequel les une ou plusieurs flammes visibles ont une orientation fixe dans le premier mode de combustion.

3. Processus selon la revendication 1, selon lequel l'orientation d'au moins une flamme visible est variée dans le premier mode de combustion.

4. Processus selon l'une quelconque des revendications précédentes, selon lequel, dans le premier mode de combustion, au moins une flamme visible est dirigée vers la charge.

5. Processus selon l'une quelconque des revendications 1 à 4, selon lequel le four est un four rotatif, ayant une paroi réfractaire sensiblement cylindrique (21), une première paroi terminale (22) à une extrémité de la paroi réfractaire cylindrique (21) et une seconde paroi terminale (23) à l'extrémité opposée de la paroi réfractaire cylindrique.

6. Processus selon la revendication 5, selon lequel, pendant le premier mode de combustion, au moins une flamme visible est dirigée vers la charge et/ou vers la paroi réfractaire cylindrique (21).

7. Processus selon l'une quelconque des revendications 1 à 4, selon lequel le four est un four à inclinaison ayant une pochette d'inclinaison (31) avec une ouverture de versement et de chargement (33) et un brûleur (34) monté dans l'ouverture de versement et de chargement (33).

8. Processus selon l'une quelconque des revendications précédentes, selon lequel un même brûleur génère une flamme visible pendant le premier mode de combustion et une combustion sans flamme pendant le second mode de combustion.

9. Processus selon l'une quelconque des revendications précédentes, comprenant un mode de combustion de transition entre le premier mode de combustion et le second mode de combustion, selon lequel dans le mode de combustion de transition le combustible est brûlé avec l'oxydant de façon à générer au moins une flamme visible et élever la température de l'atmosphère de four au moins dans la zone de l'atmosphère de four où une combustion sans flamme doit avoir lieu dans le second mode de combustion ultérieur à une température au-dessus de la limite d'inflammation inférieure du combustible.

10. Processus selon l'une quelconque des revendications précédentes, selon lequel le déchet métallique est choisi dans le groupe comprenant l'aluminium, le cuivre, le zinc, le plomb, le cobalt, le titane, le chrome, et des métaux précieux et alliages de ces métaux.

11. Processus selon la revendication 10, selon lequel le déchet métallique est l'aluminium ou un alliage d'aluminium.

12. Processus selon l'une quelconque des revendications précédentes, selon lequel le combustible est un combustible gazeux.

13. Processus selon la revendication 12, selon lequel le combustible est choisi dans le groupe comprenant le gaz naturel, le butane et le propane et leurs mélanges.

14. Processus selon l'une quelconque des revendications précédentes, selon lequel l'oxydant a une teneur en oxygène d'au moins 65 % en volume, de préférence d'au moins 80 % en volume et plus préférentiellement d'au moins 90 % en volume.

15. Processus selon l'une quelconque des revendications précédentes, selon lequel la première phase de combustion est terminée lorsque sensiblement la totalité du déchet métallique solide est fondue.
